# EUROPEAN PATENT APPLICATION

(11) **EP 2 865 920 A1**
(43) Date of publication of application: **29.04.2015**
(21) Application number: 13199533.4
(22) Date of filing: 24.12.2013
(51) Int. Cl.: F16F 15/26, F04C 14/22, F01M 1/16, F16N 13/20

(54) **Balance shaft module having variable displacement oil pump**

(30) Priority: 14.10.2013 KR 20130122232
(71) Applicant: Hyundai Motor Company, Seoul 137-938 (KR); Kia Motors Corporation, Seoul 137-938 (KR)
(72) Inventor: Lee, Hong Wook, Gyeonggi-do (KR)
(74) Representative: Viering, Jentschura & Partner Patent- und Rechtsanwälte

(57) **Abstract**

A balance shaft module having a variable capacity hydraulic pump (140) may include a first balance shaft (105) that receives torque from an engine and a first unbalance mass (125) is formed, a second balance shaft (110) that receives torque from the first balance shaft (105) through a connection gear (115), and a hydraulic pump (140) that suctions and discharges oil by the rotation of the second balance shaft (110) and varies its capacity depending on oil pressure discharged.

## Description

### CROSS-REFERENCE TO RELATED APPLICATION

The present application claims priority of Korean Patent Application Number 10-2013-0122232 filed October 14, 2013, the entire contents of which application is incorporated herein for all purposes by this reference.

### BACKGROUND OF INVENTION

### Field of Invention

The present invention relates to a balance shaft module having a variable capacity hydraulic pump that a variable capacity hydraulic pump is mounted on a balance shaft reducing vibration of an engine.

### Description of Related Art

Generally, a balance shaft module (BSM) is being applied so as to reduce vibration and noise (NVH) of an engine of a vehicle.

A conventional balance shaft module includes a first balance shaft that is connected to a crankshaft of an engine through a chain sprocket disposed at a front end thereof and a unbalance mass is disposed thereon and a second balance shaft that is rotated by the first balance shaft through a connection gear and a unbalance mass is disposed thereon.

And, the arts that the vibration and noise are reduced and simultaneously oil is pumped are introduced by adding a hydraulic pump function on a connection gear that connects the first balance shaft and the second balance shaft.

However, because the capacity of hydraulic pump only depends on the rotation of the balance shaft, the capacity of the discharge oil cannot be varied, fuel consumption is increased in a high rotation speed area of an engine, and noise and vibration can be generated from the hydraulic pump.

The information disclosed in this Background section is only for enhancement of understanding of the general background of the invention and should not be taken as an acknowledgement or any form of suggestion that this information forms the prior art already known to a person skilled in the art.

### BRIEF SUMMARY

Various aspects of the present invention have been made in an effort to provide a balance shaft module having a variable capacity hydraulic pump having advantages of absorbing vibration and noise of an engine, varying the capacity of oil pumped, and reducing fuel consumption and noise and vibration that is generated from a hydraulic pump.

As described above, a balance shaft module having a variable capacity hydraulic pump according to various aspects of the present invention may include a first balance shaft that receives torque from an engine and a first unbalance mass is formed, a second balance shaft that receives torque from the first balance shaft through a connection gear, and a hydraulic pump that suctions and discharges oil by the rotation of the second balance shaft and varies its capacity depending on oil pressure discharged.

The first balance shaft and the second balance shaft may rotate two times faster than the engine.

The variable capacity hydraulic pump may include an inner rotor that is disposed to be rotated by the second balance shaft, a vane groove is formed toward a central direction on an exterior circumference, and the vane grooves have a predetermined distance from each other in a rotating direction, a vane, one end portion of which is inserted into the vane groove, and the other end portion of which protrudes from an exterior circumference of the inner rotor, an outer ring that a suction interior circumference, a compression interior circumference, and a discharge interior circumference are sequentially formed on an interior circumference thereof, covers an outer side in such a way that the inner rotor and the vane is disposed therein, and one side of an outer side thereof rotates based on a pivot in such a way that an eccentric amount with the inner rotor is controlled, an inner ring that an exterior circumference thereof supports one end of the vane such that the other end of the vane contacts an interior circumference of the outer ring, and an elastic member that elastically supports the outer ring so as to variably control the eccentric amount of the outer ring and the inner rotor such that the outer ring rotates based on the pivot.

A thickness may be formed in a length direction of the second balance shaft, the outer ring has a first thickness, the suction interior circumference has a second thickness, the compression interior circumference has a third thickness, and the discharge interior circumference has a fourth thickness, and the second thickness is smaller than the first thickness, and the fourth thickness is smaller than the third thickness.

The first thickness may be equal to the third thickness.

The second thickness may be equal to the fourth thickness.

A vane angle that is formed between the vanes that are arranged in a rotating direction of the inner rotor may be smaller than a compression portion angle of the compression interior circumference.

The balance shaft module having a variable capacity hydraulic pump may further include a housing that contacts side surface of the outer ring and the inner rotor, wherein a plane compression portion surface is formed to correspond to the compression interior circumference of the outer ring, a suction chamber is formed at one side of the compression portion surface to correspond to the suction interior circumference of the outer ring, and a discharge chamber is formed at the other side of the compression portion surface to correspond to the discharge interior circumference of the outer ring.

A suction inner surface through which oil is sucked may be formed at an inner side of the outer ring in a rotating direction of the vane, a discharge inner surface through which oil is discharged between the discharge inner circumference is formed in a rotating direction of the vane, a distance between the suction interior circumference and the suction inner surface is gradually reduced in a rotating direction of the vane, and a distance between the discharge interior circumference and the discharge inner surface is gradually increased in a rotating direction of the vane.

In accordance with various aspects of the present invention, a variable capacity hydraulic pump is applied to a balance shaft so as to absorb vibration of an engine and simultaneously reduce fuel consumption and weight of an engine.

The methods and apparatuses of the present invention have other features and advantages which will be apparent from or are set forth in more detail in the accompanying drawings, which are incorporated herein, and the following Detailed Description, which together serve to explain certain principles of the present invention.

### BRIEF DESCRIPTION OF THE DRAWINGS

FIG. 1 is a schematic diagram of an exemplary balance shaft module having a variable capacity hydraulic pump according to the present invention.
FIG. 2 is an overall cross-sectional view of an exemplary balance shaft module having a variable capacity hydraulic pump according to the present invention.
FIG. 3 is a partial exploded side view of an exemplary balance shaft module having variable capacity hydraulic pump according to the present invention.
FIG. 4 is a perspective view of an exemplary outer ring provided in a variable capacity hydraulic pump according to the present invention.
FIG. 5 is a partial detail side view of an exemplary variable capacity hydraulic pump according to the present invention.
FIG. 6 is a partial perspective view of an exemplary housing provided in a variable capacity hydraulic pump according to the present invention.
FIG. 7 is a graph showing effects of an exemplary balance shaft module having a variable capacity hydraulic pump according to the present invention.
FIG. 8 is a partial schematic cross-sectional view of a general hydraulic pump.
FIG. 9 is a partial schematic cross-sectional view of an exemplary hydraulic pump according to the present invention.

### DETAILED DESCRIPTION

Reference will now be made in detail to various embodiments of the present invention(s), examples of which are illustrated in the accompanying drawings and described below. While the invention(s) will be described in conjunction with exemplary embodiments, it will be understood that present description is not intended to limit the invention(s) to those exemplary embodiments. On the contrary, the invention(s) is/are intended to cover not only the exemplary embodiments, but also various alternatives, modifications, equivalents and other embodiments, which may be included within the spirit and scope of the invention as defined by the appended claims.

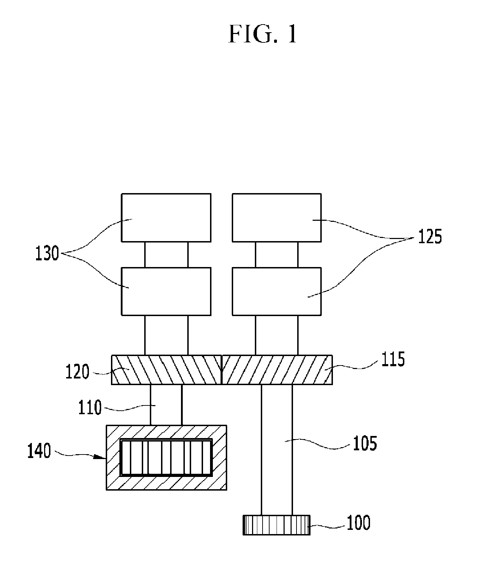

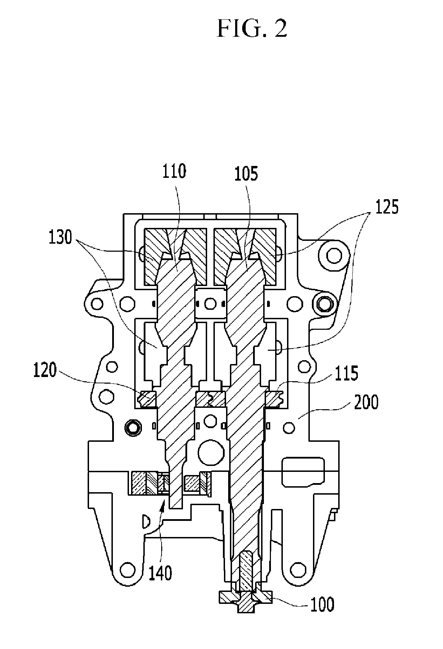

FIG. 1 is a schematic diagram of a balance shaft module having a variable capacity hydraulic pump according to various embodiments of the present invention, and FIG. 2 is an overall cross-sectional view of a balance shaft module having a variable capacity hydraulic pump according to various embodiments of the present invention.

Referring to FIG. 1 and FIG. 2, a module includes a housing 200, a sprocket 100, a first balance shaft 105, a sprocket 100, a first connection gear 115, a first unbalance mass 125, a second balance shaft 110, a second connection gear 120, and a second unbalance mass 130.

The sprocket 100 receives a crankshaft of an engine and rotates the first balance shaft 105. The first connection gear 115 is externally meshed with the second connection gear 120 and the first balance shaft 105 rotates the second balance shaft 110.

And, the first and second unbalance mass 125 and 130 rotate to reduce vibration generated from an engine as a vibration source and is set to rotate twice times faster than the rotation speed of the crankshaft of the engine.

The hydraulic pump 140 is disposed at one end portion of the second balance shaft 110, the hydraulic pump 140 is a type that a pumping capacity is varied depending on a discharge pressure of oil, and a variable capacity hydraulic pump will be described with reference to FIG. 2 to 6.

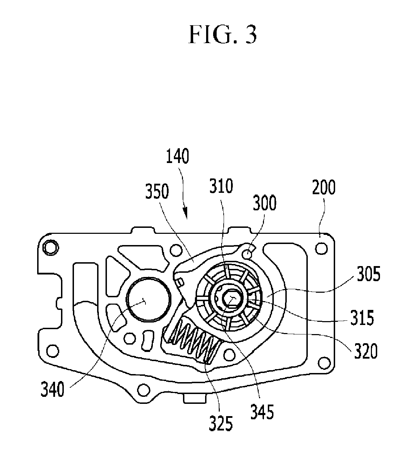

FIG. 3 is a partial exploded side view of a balance shaft module having variable capacity hydraulic pump according to various embodiments of the present invention.

Referring to FIG. 3, a variable capacity hydraulic pump 140 includes a housing 200, a vane 310, a pivot 300, an outer ring 305, an inner ring 315, an inner rotor 320, and an elastic member 325.

A first shaft hole 340 that the first balance shaft 105 penetrates is formed in the housing 200 and a second shaft hole 345 that the second balance shaft 110 penetrates is formed at a central portion of the inner rotor 320.

A vane groove is formed on an exterior circumference of the inner rotor 320 toward a central portion and one end portion of the vane 310 is inserted into an inner side of the vane groove. The other end of the vane 310 protrudes out of an exterior circumference of the inner rotor 320.

The inner rotor 320 and the vane 310 are disposed in the outer ring 305, the inner ring 315 pushes the vane 310 in such a way that the other end portion of the vane 310 can slide on an interior circumference of the outer ring 305.

One side of the outer ring 305 is rotatably disposed based on the pivot 300, and when the outer ring 305 rotates based on the pivot 300, an eccentric amount of the inner rotor 320 and the outer ring 305 is controlled.

The other side of the outer ring 305 elastically supported by the elastic member 325 in a clockwise. And, if a discharge side pressure of a hydraulic pump 140 is increased, oil pressure of a pressure chamber 350 is increased, the outer ring 305 rotates based on the pivot 300 in an anti-clockwise direction, the elastic member 325 is compressed, and each center of the outer ring 305 and the inner rotor 320 becomes shorter or equal.

As shown, the second balance shaft 110 is inserted into a second shaft hole 345 of the inner rotor 320 and the inner rotor 320 rotates together with the second balance shaft 110.

If the vane 310 slides on the interior circumference of the inner ring 315 by the rotation of the inner rotor 320, a large space between the vane 310, the inner rotor 320, and the outer ring 305 sucks oil and a small space thereof discharges oil.

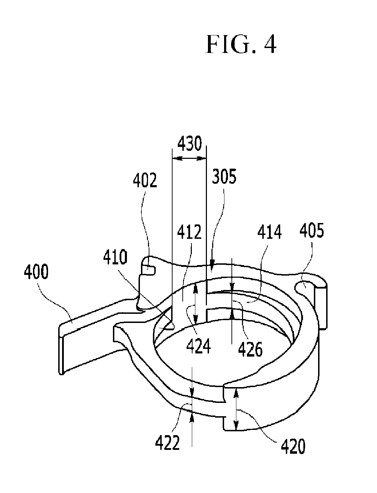

FIG. 4 is a perspective view of an outer ring provided in a variable capacity hydraulic pump according to various embodiments of the present invention.

Referring to FIG. 4, the outer ring 305 has a circular interior circumference, and a pivot groove 405 that the pivot 300 is inserted, a sealing groove 402 that a sealing member is inserted, and an arm 400 that is supported by the elastic member 325 are formed at an exterior circumference.

A suction interior circumference 410, a compression interior circumference 412, and a discharge interior circumference 414 are sequentially formed on interior circumference the outer ring 305 in a clockwise.

In a condition that the outer ring 305 is assembled on the second balance shaft 110, a thickness is formed in a length direction of the second balance shaft 110 of the outer ring 305, and the outer ring 305 has a first thickness 420.

And, the suction interior circumference 410 corresponding to a suction portion has a second thickness 422, the compression interior circumference 412 corresponding to a compression portion has a third thickness 424, and the discharge interior circumference 414 corresponding to a discharging portion has a fourth thickness 426.

As shown in the drawings, the first thickness 420 is equal to the a third thickness 424, the second thickness 422 is equal to the fourth thickness 426, and the second thickness 422 is smaller than the first thickness 420. And, the area of the second thickness 422 and the fourth thickness 426 is disposed at a central side of an area of the first thickness 420.

And, the area corresponding to the compression interior circumference 412 corresponds to a sealing angle 430.

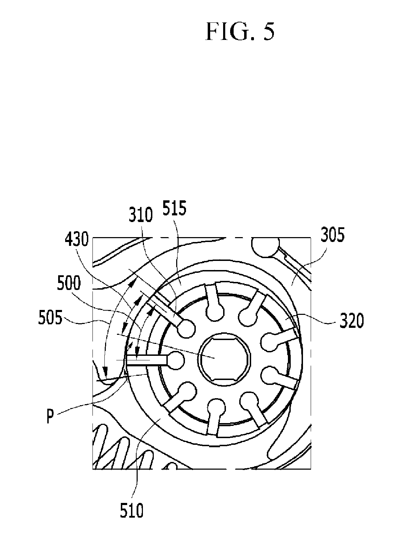

FIG. 5 is a partial detail side view of a variable capacity hydraulic pump according to various embodiments of the present invention.

Referring to FIG. 5 and FIG. 4, the vane 310 is inserted into the vane groove that is formed on an exterior circumference of the inner rotor 320, and a vane angle 500 having a predetermined value is formed between the vanes 310.

Further, a sealing angle 430 corresponding to the compression interior circumference 412, a vane angle 500 between the neighboring vanes 310, and a compression angle 505 having the vane angle are formed on the inner ring 315.

In various embodiments of the present invention, as shown in the drawings, the compression angle 505 is larger than the vane angle 500, and the vane angle 500 is larger than the sealing angle 430.

Further, when the vane angle 500 is included within the compression angle 505, oil is sucked through a gap between the vane 310 and an interior circumference of the outer ring 305 to perform substantial suction or compression.

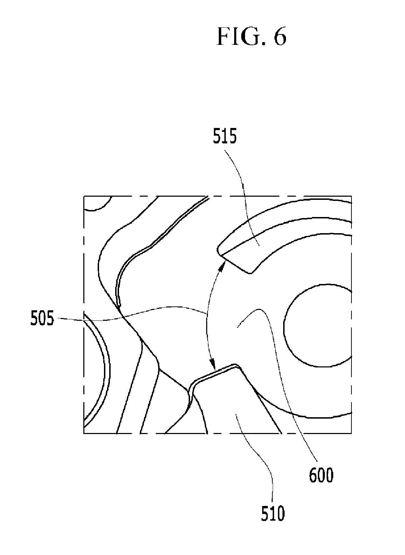

FIG. 6 is a partial perspective view of a housing provided in a variable capacity hydraulic pump according to various embodiments of the present invention.

Referring to FIG. 6, a suction chamber 510 is formed to correspond to the suction interior circumference 410, a discharge chamber 515 is formed to correspond to the discharge interior circumference 414, and a plane compression portion surface 600 is formed to correspond to the compression interior circumference 412 on the housing 200.

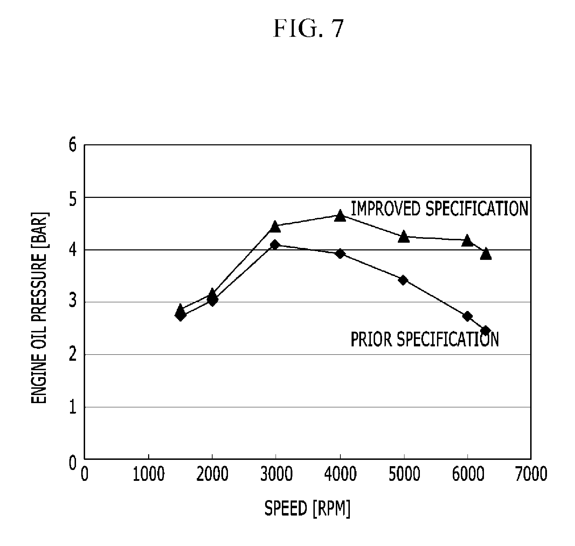

FIG. 7 is a graph showing effects of a balance shaft module having a variable capacity hydraulic pump according to various embodiments of the present invention.

Referring to FIG. 7, a horizontal axis denotes a rotation speed of an engine, and a vertical axis denotes pressure that is discharged from a variable capacity hydraulic pump 140.

In a conventional early stage specification, oil pressure is reduced from 3000 to 6000 in an area of an engine speed, and in this improved specification, oil pressure is securely maintained according to an overall speed area of an engine. Further, it is shown that the generated noise is reduced in the improved specification.

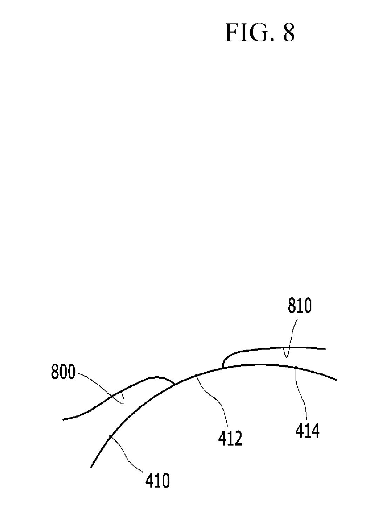

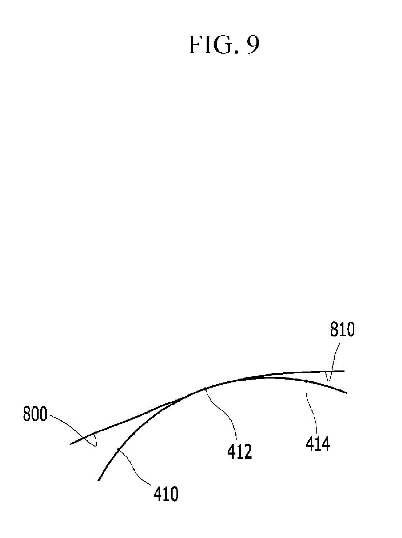

FIG. 8 is a partial schematic cross-sectional view of a general hydraulic pump, and FIG. 9 is a partial schematic cross-sectional view of a hydraulic pump according to various embodiments of the present invention.

Referring to FIG. 8, this is related to an outer ring (315 of FIG. 4), a suction inner surface 800 is formed at a suction side, a discharge inner surface 810 is formed at a discharge side, and a suction interior circumference 410 is formed between the suction inner surface 800 and the discharge inner surface 810 on the outer ring 315.

Further, a suction interior circumference 410 corresponding to the suction inner surface 800 is formed and a discharge interior circumference 414 corresponding to the discharge inner surface 810 is formed across the suction interior circumference 410.

As shown in the drawings, a distance between the suction inner surface 800 and the suction interior circumference 410 is quickly reduced in a rotating direction of the vane 310, and a distance between the discharge inner surface 810 and the discharge interior circumference 414 is quickly increased in a rotating direction of the vane 310.

A part that is different from that of FIG. 8 will be described in FIG. 9. As shown in the drawings, a distance between the suction inner surface 800 and the suction interior circumference 410 is gradually reduced in a rotating direction of the vane 310, and a distance between the discharge inner surface 810 and the discharge interior circumference 414 is gradually increased in a rotating direction of the vane 310.

Accordingly, a sudden pulsation is suppressed to be able to reduce noise and vibration when a hydraulic pump is operated.

For convenience in explanation and accurate definition in the appended claims, the terms front and etc. are used to describe features of the exemplary embodiments with reference to the positions of such features as displayed in the figures.

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto and their equivalents.

## Claims

1. A balance shaft module having a variable capacity hydraulic pump, comprising:
a first balance shaft (105) that receives torque from an engine and a first unbalance mass (125) formed thereon;
a second balance shaft (110) that receives torque from the first balance shaft through a connection gear (115); and
a hydraulic pump (140) that draws and discharges oil by the rotation of the second balance shaft and varies a pump capacity depending on oil pressure discharged.

2. The balance shaft module having a variable capacity hydraulic pump of claim 1, wherein the first balance shaft (105) and the second balance shaft (110) rotate two times faster than an engine.

3. The balance shaft module having a variable capacity hydraulic pump of claim 1 or 2, wherein the variable capacity hydraulic pump (140) includes:
an inner rotor (320) that is disposed to be rotated by the second balance shaft, a vane groove is formed toward a central direction on an exterior circumference, and the vane grooves have a predetermined distance from each other in a rotating direction;
a vane (310), one end portion of which is inserted into the vane groove, and an other end portion of which protrudes from an exterior circumference of the inner rotor;
an outer ring (305) that a suction interior circumference, a compression interior circumference, and a discharge interior circumference are sequentially formed on an interior circumference thereof, covers an outer side in such a way that the inner rotor and the vane is disposed therein, and one side of an outer side thereof rotates based on a pivot in such a way that an eccentric amount with the inner rotor is controlled;
an inner ring (315) that an exterior circumference thereof supports one end of the vane such that an other end of the vane contacts an interior circumference of the outer ring; and
an elastic member (325) that elastically supports the outer ring so as to variably control the eccentric amount of the outer ring and the inner rotor such that the outer ring rotates based on the pivot.

4. The balance shaft module having a variable capacity hydraulic pump of claim 3, wherein a thickness is formed in a length direction of the second balance shaft,
the outer ring has a first thickness, the suction interior circumference has a second thickness, the compression interior circumference has a third thickness, and the discharge interior circumference has a fourth thickness, and
the second thickness is smaller than the first thickness, and the fourth thickness is smaller than the third thickness.

5. The balance shaft module having a variable capacity hydraulic pump of claim 4, wherein the first thickness is equal to the third thickness.

6. The balance shaft module having a variable capacity hydraulic pump of claim 4 or 5, wherein the second thickness is equal to the fourth thickness.

7. The balance shaft module having a variable capacity hydraulic pump of any of claims 3-6, wherein a vane angle that is formed between the vanes (310) that are arranged in a rotating direction of the inner rotor is smaller than a compression portion angle of the compression interior circumference.

8. The balance shaft module having a variable capacity hydraulic pump of any of claims 3-7, further comprising a housing (200) that contacts side surface of the outer ring and the inner rotor,
wherein a plane compression portion surface (600) is formed to correspond to the compression interior circumference of the outer ring,
a suction chamber (510) is formed at one side of the compression portion surface to correspond to the suction interior circumference of the outer ring, and
a discharge chamber (515) is formed at an other side of the compression portion surface to correspond to the discharge interior circumference of the outer ring.

9. The balance shaft module having a variable capacity hydraulic pump of any of claims 3-8, wherein a suction inner surface (800) through which oil is sucked is formed at an inner side of the outer ring in a rotating direction of the vane,
a discharge inner surface (810) through which oil is discharged between the discharge inner circumference is formed in a rotating direction of the vane,
a distance between the suction interior circumference and the suction inner surface is gradually reduced in a rotating direction of the vane, and a distance between the discharge interior circumference and the discharge inner surface is gradually increased in a rotating direction of the vane.
